(19) **Europäisches Patentamt European Patent Office Office européen des brevets**

(11) **EP 1 389 917 B1**

(12) **EUROPEAN PATENT SPECIFICATION**

(45) Date of publication and mention
of the grant of the patent:
**07.03.2007 Bulletin 2007/10**

(21) Application number: **02727756.5**

(22) Date of filing: **27.05.2002**

(51) Int Cl.:
*A23C 19/09* (2006.01)    *A23C 9/154* (2006.01)
*A21D 13/00* (2006.01)    *A21D 10/04* (2006.01)
*A21D 13/08* (2006.01)

(86) International application number:
**PCT/GB2002/002461**

(87) International publication number:
**WO 2002/096210 (05.12.2002 Gazette 2002/49)**

(54) **FOOD PRODUCT**

LEBENSMITTEL

PRODUIT ALIMENTAIRE

(84) Designated Contracting States:
**AT BE CH CY DE DK ES FI FR GB GR IE IT LI LU MC NL PT SE TR**

(30) Priority: **29.05.2001 GB 0112956**

(43) Date of publication of application:
**25.02.2004 Bulletin 2004/09**

(73) Proprietor: **H.J. Heinz Frozen & Chilled Foods Limited Grimsby DN31 3SW (GB)**

(72) Inventors:
• **HINE, Alan
N.E. Lincs. DN37 7BB (GB)**

• **WEST, William
Ashburton,
Devon TQ13 7RA (GB)**
• **MOYNIHAN, Michele
High Wycobe,
Bucks HP13 5UG (GB)**

(74) Representative: **Hill, Christopher Michael et al
Page White & Farrer
Bedford House
John Street
London, WC1N 2BF (GB)**

(56) References cited:
EP-A- 0 216 437      EP-A- 1 036 504
WO-A-81/02377      US-A- 3 455 698
US-A- 3 666 493      US-A- 4 154 863
US-A- 4 732 772

**Description**

The present invention relates to food products having similar properties of consistency and texture to conventional cheesecakes, but using less expensive ingredients and methods of manufacture. The invention also relates to a process for producing such food products.

In the prior art WO81/02377 describes a shelf stable fluid dessert product which has a reversible gel structure at refrigerator temperatures. The dessert product is made by a method wherein a homogeneous, aqueous mixture of a gel-forming gum, starch, sweetener, agent, and a proteinaceous source is provided. The fat content of the mixture is adjusted. The mixture is homogenized after the addition of any fat source other than cream cheese or cream. The mixture is heated to a temperature and for a time sufficient to pasteurize the mixture. The pH of the mixture is adjusted to below about 4.6 and the mixture is cooled to ambient temperature whereby a thixotropic dessert product is provided which is pourable at ambient temperatures and is gelled at refrigerator temperatures. The product is particularly adapted to reset at refrigeration temperature after being subjected to substantial shear, such as by aeration treatment.

US3,666,493 describes a food composition prepared by whipping together (a) a homogenized preparation of fat, protein, sugar and emulsifier which has been acidified with an edible acid or lactic acid producing culture and chilled, with (b) a stabilizer of sugar, starch and milk or com syrup solids.

US4,732,772 describes a complete, ready-to-use cheesecake Sling mix that is storable for long periods of time at refrigerated or frozen temperatures prior to use without degradation of the mixture product, and which, upon aeration by whipping and upon baking, produces a premium quality cheesecake dessert filling, comprising a homogeneous mixture of milk, cream, whole eggs, sugar, nonfat dry milk, sodium caseinate, salt, modified starch, locust bean gum, xanthan gum, mono and diglycerides, sodium tripoly phosphate, citric acid, phosphoric acid, acetic acid and water.

EP 1036504 describes a baked, shelf-stable, hand-held snack bar comprised of a crust and a smooth, creamy cheese-cake-like filling. The crust surrounds the bottom and longitudinal sides of the bar. The filling is exposed on its top surface. The filling and crust are each formulated to water activity of 0.60 - 0.90 and the filling has a milk fat content of less than 10%.

US3,455,698 describes a dry food mix which is reconstitutable as a cheesecake filling comprising a major portion of an acid coagulable protein source, sugar, flour, cornstarch and an acidogen which is hydrolyzable in water to release an edible acid. The acidogen is selected so as to provide a pH in a batter of at least about 5.5 during the time period required for preparing the batter when the temperature of the batter is at least 180°F and at a level sufficient to effect coagulation of the protein source when fully hydrolyzed.

Finally, US4,154,863 describes microbiologically stable flour based batters which remain soft and ready for use at freezer temperatures and which can be maintained at room temperature and refrigerator temperature for an extended period of time. These batters are prepared by controlling their sugar/fat content. The batters are of intermediate-moisture content and have sufficient sugar solutes to provide a bacteriostatic effect.

Cheesecakes are a type of food product which are popular with consumers because of their particular properties of texture and consistency, as well as their flavour and acidity. These properties vary according to their method of manufacture. Cheesecakes usually consist of a batter layer resting on a base layer. Cheesecake batters are typically prepared either by baking or by a cold-set method. The baking method is typically used to produce a denser, crumbly type of product, whereas the cold-set method produces a lighter, more mousse-like product.

The baking method typically uses a batter mix containing soft cheese, cream, flour, sugar and eggs. This mix is baked slowly at low temperatures in order to set the delicate structure without over-baking the outer surfaces. The disadvantage of this method is that the extended baking time required necessitates the use of either a slow batch process or a long and expensive travelling oven. Furthermore the use of a high proportion of expensive ingredients such as soft cheese, cream and egg in the batter mix of this method adds considerably to the overall cost

The cold-set method typically uses a batter mix containing soft cheese, cream and sugar. This method relies on the properties of the fat and whey proteins in whipped cream to set the mix, or other gelling agents such as gelatin may be added to facilitate setting. The disadvantage of this method is that it also relies on a high proportion of expensive ingredients such as soft cheese and cream in the batter mix.

There is therefore a need for a food product which would appeal to consumers who desire to have a cheesecake-like product but at a lower price.

The present invention aims to solve the problems associated with the prior art methods and products. In particular the present invention aims to provide a food product having similar properties of consistency and texture to conventional baked or cold-set cheesecakes, but using less expensive ingredients and methods of manufacture.

Accordingly, the present invention provides a process for producing a food product, comprising the steps of preparing a batter mix comprising milk protein and having a solids content of 45% or more by weight, homogenising the mix, pasteurising the mix, acidifying the mix and cooling the mix.

In a further aspect, the present invention provides a product obtainable by a process as defined above.

The present invention also provides a food product having a solids content of 45% or more by weight and 1 to 10% by weight of milk protein, wherein the total proportion of cheese and cream in the food product is less than 25% by weight.

The present invention also provides a layered food product comprising a food product as defined above and a base layer.

The processes of the present invention advantageously allow the production of a food product having similar properties of texture and consistency to conventional cheesecakes. However, whereas conventional baked cheesecakes and cold-set cheesecakes use a high proportion of expensive ingredients such as cheese, cream and egg, the food products of the present invention do not necessarily require the use of such ingredients. In the present invention the texture of conventional cheesecakes may be achieved by the inclusion of milk protein along with gelling agents and stabilisers instead of the above ingredients. Furthermore the present invention may be applied to produce a range of cheesecake textures from denser textures similar to conventional baked cheesecakes to lighter textures similar to conventional cold-set cheesecakes.

In the process for producing a food product of the present invention, the batter mix has a solids content of 45% or more by weight, preferably 45 to 60% by weight, more preferably 45 to 50% by weight, and most preferably 48 to 50% by weight. The process of the present invention allows the use of a mix having a proportion of solids similar to that used for conventional baked cheesecakes but higher than that used for conventional cold-set cheesecakes.

The solids content of the batter mix or food product is the total dry matter content remaining (as a percentage by weight of the total weight of the batter mix or food product before drying) after removal of moisture by drying. Drying is typically effected by heating the batter mix or food product in an oven at 105°C until a constant weight is achieved.

The batter mix preferably comprises 1 to 10% by weight of milk protein, more preferably 3 to 8% by weight of milk protein and most preferably 4 to 6% by weight of milk protein. The incorporation of milk protein contributes to producing a texture similar to a conventional cheesecake following the pasteurisation and optional acidification step. Milk protein may be added to the mix in the form of milk, concentrated milk, skimmed milk, whole milk powder, skimmed milk powder, casein, caseinates or any other form available.

The batter mix preferably comprises 0.3 to 3% by weight of one or more gelling agents or stabilisers. Suitable gelling agents and stabilisers include sodium alginate, gelatine, carrageenan, locust bean gum, gum agar and guar gum. The batter mix preferably comprises 0.1 to 0.6% by weight of sodium alginate. The mix also preferably comprises 0.1 to 0.6% by weight of locust bean gum, gum agar or guar gum. 0.2 to 1.4% gelatine is preferably added after cooling the mix. The incorporation of gelling agents and stabilisers contributes to producing the required cheesecake texture. It also contributes to the stability of the food products obtained by the process (particularly the freeze-thaw stability of such products) and enables the products to be sliced more readily and cleanly.

The levels of stabilisers and gelling agents may be altered to modify the texture of the food product in terms of its firmness, openness, chewiness, gelatinous character and curdiness. In certain embodiments where a vegetarian product is required, gelatine may be omitted and preferably higher levels of gums such as carrageenan are used.

The batter mix preferably comprises 0.1 to 1% by weight of an emulsifier. Any suitable oil in water emulsifier may be employed, depending on the final properties required in terms of overrun, or other detailed textural attributes. Typically emulsifiers such as acetylated monoglyceride, lactylated monglyceride, citric acid esters or propylene glycol monoester are used. Preferably the emulsifier comprises mono- and diglycerides of fatty acids or lactic acid esters of mono- and diglycerides of fatty acids (E472b). The use of emulsifiers stabilises the fat in water emulsion and allows the incorporation of air if the mix is whipped following cooling. This contributes to generating the required smoothness and lightness in the food product.

The batter mixes of the present invention do not necessarily contain a high proportion of cheese, cream or egg. The total proportion of cheese and cream in the batter mix is preferably less than 25% by weight, more preferably less than 20% by weight, less than 15% by weight, less than 10% by weight, less than 5% by weight, less than 3 % by weight, or less than 2% by weight and most preferably less than 1% by weight. Preferably the proportion of soft cheese in the mix is less than 10% by weight.

The batter mix should not contain too high a proportion of egg, as this would render the batter mix unsuited to the pasteurisation step of the methods of the present invention. Preferably the batter mix comprises less than 2% of egg, more preferably less than 1% of egg and most preferably substantially no egg.

Typically the batter mix comprises 2 to 30% of fat, depending on the type of product required. In a low fat product, the batter mix preferably has a fat content of 2 to 5%. Suitable fats include animal fats such as butter or cream, or vegetable fats such as coconut oil, hardened palm kernel oil, hardened soya oil or hardened rapeseed oil. Preferably the fat is bland or has a dairy flavour. The melting point of the fat should typically be low enough to avoid plate cling but high enough to facilitate good fat globule formation and the incorporation of air if the product is whipped following cooling.

The batter mix typically further comprises 1 to 30% by weight of sugar. Alternatively, a low calorie sweetener may be used. Colourings, flavourings and other ingredients such as soft cheese, chocolate or toffee may be included in certain embodiments.

The batter mix may be mixed in any suitable mixing apparatus. Typically the batter is cold mixed in a high shear mixer such as a slurry mixer with a high speed impeller. To maximise the quality of the mix, in a preferred embodiment the stabilisers are first blended with sugar. The water and milk protein are mixed separately and fat (if present) is melted separately with emulsifiers. If milk protein in the form of a dried milk powder or partially dried milk is used, the water and milk protein should be mixed thoroughly to ensure full rehydration. The blended sugar and stabilisers are then added to the water and milk protein mix and the melted fat and emulsifiers. The remainder of the sugar and any colourings, flavourings, soft cheese and other ingredients are then added. The batter is preferably mixed until a substantially homogeneous mix is produced.

After mixing, the batter mix is homogenised in any suitable homogeniser. The homogenisation step may be performed before or after the pasteurisation step. In some embodiments homogenisation may be effected more easily when the mix is at an elevated temperature following pasteurisation, or the mix may be homogenised at a lower temperature prior to pasteurisation. Typically the homogenisation step is carried out at a temperature of 50 to 80°C. Preferably the mix is homogenised in a standard continuous homogeniser. Any suitable pressure may be used, but typically the mix is homogenised at about 150 bar pressure in a single stage. The homogenisation step contributes to producing a cheesecake-like texture in the final product by reducing the fat globule size and achieving a good fat globule dispersion, thereby generating a smooth creamy consistency.

The mix is pasteurised preferably by heating to at least 70°C for 30 seconds or more. Typically the mix is heated to 80°C for 30 seconds. The pasteurisation step ensures complete dispersion of any stabilisers and gums in the mix, and also contributes to the microbiological safety of the product. It also assists in coagulation of the milk protein, which helps to produce the texture of conventional cheesecakes in the product.

The mix is pasteurised preferably by heating to at least 70°C for 30 seconds or more. Typically the mix is heated to 80°C for 30 seconds. The pasteurisation step ensures complete dispersion of any stabilisers and gums in the mix, and also contributes to the microbiological safety of the product. It also assists in coagulation of the milk protein, which helps to produce the texture of conventional cheesecakes in the product.

Following homogenisation and pasteurisation, an acid solution is preferably added to the mix. The acid may be added at any stage, but is preferably added after homogenisation and pasteurisation when the temperature of the mix is between 20 and 80°C. Any suitable acid may be used, but preferably the acid is an organic acid. More preferably the acid is citric acid or lactic acid, which are particularly suitable due to their taste characteristics, but other acids such as malic acid, succinic acid, adipic acid, tartaric acid and phosphoric acid may be used. Typically a dilute acid premix is prepared before adding this to the batter mix.

The acid is preferably added until the batter mix reaches a pH of 4.0 to 5.5, preferably 4.8 to 5.0. These pH values are around the isoelectric point of casein, which contributes to allowing the milk proteins in the mix to coagulate and produce the required curdiness and texture in the product.

The mix is preferably cooled to a temperature of 0 to 15°C following the homogenisation, pasteurisation or acidification step (whichever of those steps is the last to be performed), more preferably to a temperature of 2 to 10°C. Cooling the mix ensures the bacteriological safety of the product during any subsequent operations. Furthermore, if the product is subsequently whipped, the whipping process is carried out more readily at lower temperatures.

The mix is preferably whipped following cooling. Whipping aerates the mix and contributes to producing a light cheesecake-like texture in the final product The mix may be whipped using any suitable whipping apparatus. Preferably the mix is whipped in a Mondomix machine, typically to a level of approximately 40% to 60% overrun. Lighter textures can be achieved by increasing this up to 120% overrun, or denser textures may be achieved by reducing the level to 0% overrun. Alternatively air may be introduced to the mix in a scraped surface ice cream freezer with air injection. A gelling agent such as gelatine is preferably added at the whipping stage in order to provide more body and stability in the final product. Gelatine in particular, as well as any emulsifiers added earlier, contribute to the incorporation of air during whipping.

Overrun is the commonly accepted measure of aeration of a whipped mix. Overrun (expressed as a percentage) is determined according to the equation:

$$\text{Overrun} = 100 \times \frac{[\text{weight of 1 litre of mix before whipping - weight of 1 litre of whipped mix}]}{\text{weight of 1 litre of whipped mix}}$$

The final texture of the mix may suitably be modified by varying the temperature and degree of acidification, the level of milk protein, stabilisers, gelling agents, gums, emulsifiers and other solids, the level and type of fat used, and the degree to which the mix is whipped. In certain embodiments, a low fat product may be produced by reducing the amount of fat and replacing it with additional milk protein or carbohydrates. In other embodiments, a denser heavy-baked product may be produced by incorporating a higher proportion of fat and milk protein. In a preferred embodiment the product has a mousse-like texture.

The mix may typically be deposited into the final product container following cooling or whipping. In the process for producing a layered food product of the present invention, the mix is deposited onto a base layer. To achieve a cheesecake-like product, the mix is preferably deposited onto a base layer such as a prebaked biscuit base or sponge base. In another embodiment the mix may be added to the final product container without the incorporation of another layer or base. Fruit, chocolate or other particulates may optionally be added at this stage.

The final product may be further cooled or frozen to set and stabilise the surface of the product. Typically a whipped product may be blast frozen, or the product may be frozen in a scraped surface ice cream freezer. In some embodiments a topping or decoration may be added.

The food products of the present invention have a solids content of 45% or more by weight, preferably 45 to 60% by weight, more preferably 45 to 50% by weight, and most preferably 48 to 50% by weight.

The food products comprise 1 to 10% by weight of milk protein, more preferably 3 to 8% by weight of milk protein and most preferably 4 to 6% by weight of milk protein.

The food products preferably comprise 0.3 to 3% by weight of one or more gelling agents or stabilisers. The food products preferably comprise 0.1 to 0.6% by weight of sodium alginate. The food products also preferably comprise 0.1 to 0.6% by weight of locust bean gum, gum agar or guar gum. In a preferred embodiment the food product comprises 0.2 to 1.4% of gelatine.

The food products preferably comprise 0.1 to 1% by weight of an emulsifier. Preferably the emulsifier comprises mono- or diglycerides of fatty acids or lactic acid esters of mono- or diglycerides of a fatty acids (E472b).

The food products preferably have a pH of 4.0 to 5.5, more preferably 4.8 to 5.0. The food products preferably comprise 0.1 to 1% of an organic acid. More preferably the acid comprises citric acid or lactic acid.

The food products of the present invention do not necessarily contain a high proportion of cheese, cream or egg. The total proportion of cheese and cream in the food product is preferably less than 25% by weight, more preferably less than 20% by weight, less than 15% by weight, less than 10% by weight, less than 5% by weight, less than 3% by weight, or less than 2% by weight and most preferably less than 1% by weight. Preferably the proportion of soft cheese in the mix is less than 10% by weight. Preferably the batter mix comprises less than 2% of egg, more preferably less than 1% of egg and most preferably substantially no egg.

Typically the food product comprises 2 to 30% of fat, depending on the type of product required. In a low fat product, the batter mix preferably has a fat content of 2 to 5%. The food product typically further comprises 1 to 30% by weight of sugar. Colourings, flavourings and other ingredients such as soft cheese, chocolate or toffee may be included in certain embodiments.

The food products of the present invention may be added to a base layer to form a layered food product. Suitable base layers include prebaked biscuit or sponge. Preferably the layered food product is a cheesecake.

The invention will now be described by way of example only with reference to the following specific embodiment.

The example describes the preparation of a cheesecake-like batter having intermediate properties of texture between those a conventional baked cheesecake and a conventional cold-set cheesecake.

Batter mix recipe

| | |
|---|---|
| Skimmed milk powder | 11 % |
| Hardened palm kernel oil | 18.9% |
| Sugar | 17% |
| Water | 49.6% |
| Soft cheese | 1.1% |
| Locust bean gum | 0.3% |
| Gelatine | 0.8% |
| Sodium alginate | 0.3% |
| Flavouring | 0.2% |
| Mono- and diglycerides of fatty acids | 0.2% |
| Citric acid | 0.6% |
| | |
| Total solids | 49% |

The above ingredients apart from the acid and gelatine were mixed in a slurry mixer as an "all in" mix. The mix was pasteurised to 80°C for 1 minute and then homogenised at 150 bar in a single stage homogeniser. The acid was added to produce a final pH of 4.8 and then the mix was cooled to below 10°C. The gelatine solution was added and the mixture whipped in a Mondomix until an overrun of 40% was achieved.

**Claims**

1. A process for producing a food product, comprising the steps of:

   (a) preparing a batter mix comprising milk protein and having a solids content of 45% or more by weight and in which the total proportion of cheese and cream is less than 25% by weight
   (b) homogenising the mix
   (c) pasteurising the mix
   (d) acidifying the mix at a temperature of 20 to 80°C; and
   (e) cooling the mix.

2. A process according to claim 1, further comprising depositing the mix onto a base layer.

3. A process according to claim 1 or claim 2, wherein the batter mix in step (a) comprises 1 to 10% by weight of milk protein.

4. A process according to any preceding claim, wherein the batter mix in step (a) has a total fat content of 2 to 30%.

5. A process according to claim 4, wherein the batter mix in step (a) has a total fat content of 2 to 5%.

6. A process according to any preceding claim, wherein the batter mix in step (a) comprises 0.3 to 3% by weight of one or more of gelling agents or stabilisers.

7. A process according to claim 6, wherein the batter mix comprises 0.1 to 0.6% by weight of sodium alginate.

8. A process according to claim 6 or claim 7, wherein the batter mix comprises 0.1 to 0.6% by weight of locust bean gum, gum agar or guar gum.

9. A process according to any of claims 6 to 8, wherein the batter mix comprises 0.2 to 1.4% by weight of gelatine.

10. A process according to any preceding claim, wherein the batter mix comprises 0.1 to 1% by weight of an emulsifier.

11. A process according to any preceding claim, wherein the mix is acidified in step (d) by addition of acid until a pH of 4.0 to 5.5 is reached.

12. A process according to any preceding claim, wherein the mix is cooled in step (e) to a temperature of 10°C or below.

13. A process according to any preceding claim, wherein the process comprises the further step of whipping the mix following the cooling step (e).

14. A process according to any of claims 2 to 13, wherein the batter mix in step (a) has a solids content of 45% or more by weight.

15. A product obtainable by a process as defined in any preceding claim.

16. A food product having a solids content of 45% to 50% by weight and comprising 1 to 10% by weight of milk protein, wherein the total proportion of cheese and cream in the food product is less than 25% by weight, and the total fat content of the food product is between 2 and 30%.

17. A food product according to claim 16, wherein the food product comprises 0.3% to 3% by weight of one or more gelling agents or stabilisers.

18. A food product according to claim 16 or 17, wherein the food product comprises 3 to 8% by weight of milk protein.

19. A food product according to any of claims 16 to 18, wherein the food product has a total fat content of 2 to 5%.

20. A food product according to any of claims 16 to 19, wherein the food product comprises 0.1 to 1% by weight of an emulsifier.

21. A food product according to claim 20, wherein the emulsifier comprises lactic acid esters of mono- and diglycerides of fatty acids.

22. A food product according to any of claims 17 to 21, wherein the food product comprises 0.1 to 0.6% by weight of sodium alginate.

23. A food product according to any of claims 17 to 22, wherein the food product comprises 0.1 to 0.6% by weight of locust bean gum, gum agar or guar gum.

24. A food product according to any of claims 17 to 23, wherein the food product comprises 0.2 to 1.4% by weight of gelatine.

25. A food product according to any of claims 16 to 24, wherein the food product has a pH of 4.0 to 5.5.

26. A food product according to any of claims 16 to 25, wherein the food product comprises 0.1 to 1 % by weight of an organic acid.

27. A food product according to claim 26, wherein the acid comprises citric acid or lactic acid.

28. A food product according to any of claims 16 to 27, wherein the food product has a mousse-like texture.

29. A layered food product comprising a food product as defined in any of claims 16 to 28 and a base layer.

30. A layered food product according to claim 29, wherein the layered food product is a cheesecake.

**Patentansprüche**

1. Verfahren zur Herstellung eines Lebensmittelprodukts, umfassend die Schritte:

   (a) Herstellen einer Teigmischung, welche Milchprotein umfasst und einen Feststoffgehalt von 45 oder mehr Gew.-% besitzt, und in welcher der Gesamtanteil an Käse und Rahm weniger als 25 Gew.-% beträgt,
   (b) Homogenisieren der Mischung.
   (c) Pasteurisieren der Mischung.
   (d) Ansäuern der Mischung bei einer Temperatur von 20 bis 80°C; und
   (e) Kühlen der Mischung.

2. Verfahren nach Anspruch 1 umfassend weiterhin Abscheiden der Mischung auf einer Grundschicht.

3. Verfahren nach Anspruch 1 oder Anspruch 2, wobei die Teigmischung in Schritt (a) 1 bis 10 Gew.-% Milchprotein umfasst.

4. Verfahren nach irgendeinem vorangehenden Anspruch, wobei dic Teigmischung in Schritt (a) einen Gesamtfettgehalt von 2 bis 30% besitzt.

5. Verfahren nach Anspruch 4, wobei die Teigmischung in Schritt (a) einen Gesamtfettgehalt von 2 bis 5% besitzt.

6. Verfahren nach irgendeinem vorangehenden Anspruch, wobei die Teigmischung in Schritt (a) 0.3 bis 3 Gew.-% eines oder mehrere aus Geliermitteln oder Stabilisatoren umfasst.

7. Verfahren nach Anspruch 6, wobei die Teigmischung 0.1 bis 0.6 Gew.-% Natriumalginat umfasst.

8. Verfahren nach Anspruch 6 oder Anspruch 7, wobei die Teigmischung 0,1 bis 0,6 Gew.-% Johannisbrot Gum, Gum Agar oder Guar Gum umfasst.

9. Verfahren nach irgendeinem der Ansprüche 6 bis 8, wobei die Teigmischung 0,2 bis 1.4 Gew.-% Gelatine umfasst.

10. Verfahren nach irgendeinem vorangehenden Anspruch, wobei die Teigmischung 0,1 bis 1 Gew.-% eines Einulgiermlttels umfasst.

11. Verfahren nach irgendeinem vorangehenden Anspruch, wobei die Mischung in Schritt (d) **dadurch** angesäuert wird, dass Säure zugegeben wird, bis ein pH von 4,0 bis 5,5 erreicht ist.

12. Verfahren nach irgendeinem vorangehenden Anspruch, wobei die Mischung in Schritt (e) auf eine Temperatur von 10°C oder weniger gekühlt wird.

13. Verfahren nach irgendeinem vorangehenden Anspruch, wobei das Verfahren den weiteren Schritt des Schlagens der Mischung im Anschluss an den Kühlschritt (e) umfasst.

14. Verfahren nach irgendeinem der Ansprüche 2 bis 13, wobei die Teigmischung in Schritt (a) einen Feststoffgehalt von 45 oder mehr Gew.-% besitzt.

15. Produkt, erhältlich durch ein Verfahren wie in irgendeinem vorangehenden Anspruch definiert.

16. Lebensmittelprodukt mit einem Feststoffgehalt von 45 bis 50 Gew.-%, das 1 bis 10 Gew.-% Milchprotein umfasst, wobei der Gesamtanteil an Käse und Rahm in dem Lebensmittelprodukt weniger als 25 Gew.-% beträgt, und der Gesamtfettgehalt des Lebensmittelprodukts zwischen 2 und 30% beträgt.

17. Lebensmittelprodukt nach Anspruch 16, wobei das Lebensmittelprodukt 0,3 bis 3 Gew.-% eines oder mehrerer aus Geliermitteln oder Stabilisatoren umfasst.

18. Lebensmittelprodukt nach Anspruch 16 oder 17, wobei das Lebensmittelprodukt 3 bis 8 Gew.-% Milchprotein umfasst.

19. Lebensmittelprodukt nach irgendeinem der Ansprüche 16 bis 18, wobei das Lebensmittelprodukt einen Gesamtfettgehalt von 2 bis 5% besitzt.

20. Lebensmittelprodukt nach irgendeinem der Ansprüche 16 bis 19, wobei das Lebensmittelprodukt 0.1 bis 1 Gew.-% eines Emulgiermittels umfasst.

21. Lebensmittelprodukt nach Anspruch 20, wobei das Emulgiermittel Milchsäureester von Mono- und Diglyceriden von Fettsäuren umfasst.

22. Lebensmittelprodukt nach irgendeinem der Ansprüche 17 bis 21, wobei das Lebensmittelprodukt 0,1 bis 0,6 Gew.-% Natriumalginat umfasst.

23. Lebensmittelprodukt nach irgendeinem der Ansprüche 17 bis 22, wobei das Lebensmittelprodukt 0,1 bis 0,6 Gew.-% Johannisbrot Gum, Gum Agar oder Guar Gum umfasst.

24. Lebensmittelprodukt nach irgendeinem der Ansprüche 17 bis 23, wobei das Lebensmittelprodukt 0,2 bis 1,4 Gew.-% Gelatine umfasst.

25. Lebensmittelprodukt nach irgendeinem der Ansprüche 16 bis 24, wobei das Lebensmittelprodukt einen pH vom 4,0 bis 5,5 besitzt.

26. Lebensmittelprodukt nach irgendeinem der Ansprüche 16 bis 25, wobei das Lebensmittelprodukt 0,1 bis 1 Gew.-% einer organischen Säure umfasst.

27. Lebensmittelprodukt nach Anspruch 26, wobei die Säure Citronensäure oder Milchsäure umfasst.

28. Lebensmittelprodukt nach irgendeinem der Ansprüche 16 bis 27, wobei das Lebensmittelprodukt eine schaumähnliche Textur besitzt.

**29.** Schlcht-Lebensmittelprodukt, umfassend ein Lebensmittelprodukt wie in irgendeinem der Ansprüche 16 bis 28 definiert und eine Grundschicht.

**30.** Schlcht-Lebensmittelprodukt nach Anspruch 29, wobei das Schicht-Lebensmittelprodukt ein Käsekuchen ist.


**Revendications**

**1.** Procédé de production d'un produit alimentaire, comprenant les étapes de :

(a) préparation d'un mélange de pâte lisse comprenant une protéine du lait et ayant une teneur en matière solide d'au moins 45 % en poids et dans lequel la proportion totale de fromage et de crème est inférieure à 25 % en poids
(b) homogénéisation du mélange
(c) pasteurisation du mélange
(d) acidification du mélange à une température de 20 à 80°C ; et
(e) refroidissement du mélange.

**2.** Procédé selon la revendication 1, comprenant de plus le dépôt du mélange sur une couche de base.

**3.** Procédé selon la revendication 1 ou la revendication 2, dans lequel le mélange de pâte lisse de l'étape (a) comprend 1 à 10 % en poids de protéine du lait.

**4.** Procédé selon l'une quelconque des revendications précédentes, dans lequel le mélange de pâte lisse de l'étape (a) a une teneur en matière grasse totale de 2 à 30 %.

**5.** Procédé selon la revendication 4, dans lequel le mélange de pâte lisse de l'étape (a) a une teneur en matière grasse totale de 2 à 5 %.

**6.** Procédé selon l'une quelconque des revendications précédentes, dans lequel le mélange de pâte lisse de l'étape (a) comprend 0,3 à 3 % en poids d'un ou plusieurs agents gélifiants ou stabilisants.

**7.** Procédé selon la revendication 6, dans lequel le mélange de pâte lisse comprend 0,1 à 0,6 % en poids d'alginate de sodium.

**8.** Procédé selon la revendication 6 ou la revendication 7, dans lequel le mélange de pâte lisse comprend 0,1 à 0,6 % en poids de gomme de caroube, d'agar-agar ou de gomme de guar.

**9.** Procédé selon l'une quelconque des revendications 6 à 8, dans lequel le mélange de pâte lisse comprend 0,2 à 1,4 % en poids de gélatine.

**10.** Procédé selon l'une quelconque des revendications précédentes, dans lequel le mélange de pâte lisse comprend 0,1 à 1 % en poids d'un émulsifiant.

**11.** Procédé selon l'une quelconque des revendications précédentes, dans lequel le mélange est acidifié dans l'étape (d) par addition d'acide jusqu'à atteindre un pH de 4,0 à 5,5.

**12.** Procédé selon l'une quelconque des revendications précédentes, dans lequel le mélange est refroidi dans l'étape (e) jusqu'à une température de 10°C ou moins.

**13.** Procédé selon l'une quelconque des revendications précédentes, dans lequel le procédé comprend l'étape supplémentaire consistant à fouetter le mélange à la suite de l'étape de refroidissement (e).

**14.** Procédé selon l'une quelconque des revendications 2 à 13, dans lequel le mélange de pâte lisse de l'étape (a) a une teneur en matière solide d'au moins 45 % en poids.

**15.** Produit pouvant être obtenu par un procédé tel que défini dans l'une quelconque des revendications précédentes.

**16.** Produit alimentaire ayant une teneur en matière solide de 45 % à 50 % en poids et comprenant 1 à 10 % en poids de protéine du lait, dans lequel la proportion totale de fromage et de crème dans le produit alimentaire est inférieure à 25 % en poids, et la teneur en matière grasse totale du produit alimentaire est comprise entre 2 et 30 %.

**17.** Produit alimentaire selon la revendication 16, dans lequel le produit alimentaire comprend 0,3 % à 3 % en poids d'un ou plusieurs agents gélifiants ou stabilisants.

**18.** Produit alimentaire selon la revendication 16 ou 17, dans lequel le produit alimentaire comprend 3 à 8 % en poids de protéine du lait.

**19.** Produit alimentaire selon l'une quelconque des revendications 16 à 18, dans lequel le produit alimentaire a une teneur en matière grasse totale de 2 à 5 %.

**20.** Produit alimentaire selon l'une quelconque des revendications 16 à 19, dans lequel le produit alimentaire comprend 0,1 à 1 % en poids d'un émulsifiant.

**21.** Produit alimentaire selon la revendication 20, dans lequel l'émulsifiant comprend des esters d'acide lactique de mono- et diglycérides d'acides gras.

**22.** Produit alimentaire selon l'une quelconque des revendications 17 à 21, dans lequel le produit alimentaire comprend 0,1 à 0,6 % en poids d'alginate de sodium.

**23.** Produit alimentaire selon l'une quelconque des revendications 17 à 22, dans lequel le produit alimentaire comprend 0,1 à 0,6 % en poids de gomme de caroube, d'agar-agar ou de gomme de guar.

**24.** Produit alimentaire selon l'une quelconque des revendications 17 à 23, dans lequel le produit alimentaire comprend 0,2 à 1,4 % en poids de gélatine.

**25.** Produit alimentaire selon l'une quelconque des revendications 16 à 24, dans lequel le produit alimentaire a un pH de 4,0 à 5,5.

**26.** Produit alimentaire selon l'une quelconque des revendications 16 à 25, dans lequel le produit alimentaire comprend 0,1 à 1 % en poids d'un acide organique.

**27.** Produit alimentaire selon la revendication 26, dans lequel l'acide comprend de l'acide citrique ou de l'acide lactique.

**28.** Produit alimentaire selon l'une quelconque des revendications 16 à 27, dans lequel le produit alimentaire a une texture de mousse.

**29.** Produit alimentaire en couches comprenant un produit alimentaire tel que défini dans l'une quelconque des revendications 16 à 28 et une couche de base.

**30.** Produit alimentaire en couches selon la revendication 29, dans lequel le produit alimentaire en couches est un gâteau au fromage.